## Europäisches Patentamt
## European Patent Office
## Office européen des brevets

(19)

(11) **EP 0 884 373 B1**

(12)

# FASCICULE DE BREVET EUROPEEN

(45) Date de publication et mention
de la délivrance du brevet:
**19.03.2003 Bulletin 2003/12**

(51) Int Cl.⁷: **C10G 45/40**, B01J 23/652

(21) Numéro de dépôt: **98401224.5**

(22) Date de dépôt: **20.05.1998**

(54) **Procédé de traitement de coupes essences contenant des dioléfines, des composés styréniques et éventuellement des mercaptans**

Verfahren zur Behandlung von Diolefinen, Styrolverbindungen und gegebenenfalls Mercaptanen enthaltenden Benzinschnitten

Process for the treatment of gasoline fractions containing diolefins, styrenic compounds and possibly mercaptans

(84) Etats contractants désignés:
**BE DE GB IT NL**

(30) Priorité: **09.06.1997 FR 9707213**
**09.06.1997 FR 9707214**

(43) Date de publication de la demande:
**16.12.1998 Bulletin 1998/51**

(73) Titulaire: **INSTITUT FRANCAIS DU PETROLE**
**92500 Rueil Malmaison (FR)**

(72) Inventeurs:
• **Didillon, Blaise**
**92500 Rueil Malmaison (FR)**

• **Uzio, Denis**
**78160 Marly le Roy (FR)**
• **Cameron, Charles**
**75005 Paris (FR)**
• **Gautreau, Christophe**
**78360 Montesson (FR)**

(56) Documents cités:
| | |
|---|---|
| **EP-A- 0 653 242** | **EP-A- 0 685 552** |
| **DE-A- 2 736 955** | **GB-A- 954 203** |
| **US-A- 3 422 002** | **US-A- 3 691 066** |
| **US-A- 3 801 516** | **US-A- 4 472 529** |

Printed by Jouve, 75001 PARIS (FR)

**Description**

La présente invention concerne un procédé de traitement d'essences contenant des dioléfines et des composés styréniques (en particulier le styrène) et éventuellement des mercaptans. Elle s'applique particulièrement au traitement des essences de vapocraquage ou de craquage catalytique.

On sait que les essences de vapocraquage contiennent des composés précurseurs de gommes, tels que des dioléfines, ainsi que des composés styréniques (tels que le styrène lui-même), en mélange avec des composés monooléfiniques et des composés aromatiques. La valorisation des composés monooléfiniques passe par une hydrogénation sélective des dioléfines et des composés styréniques.

Le craquage d'hydrocarbures pour la production d'oléfines produit une fraction liquide dont une partie des composés a un point d'ébullition correspondant aux coupes essences traditionnelles. Ce mélange présente des teneurs en composés aromatiques et monooléfiniques élevées, qui lui confèrent de bonnes propriétés en tant que carburant et qui lui permettent d'être valorisé, soit dans le « pool essence », soit comme source de composés aromatiques. Cependant, ces essences de craquage contiennent de fortes teneurs en composés fortement réactifs, tels que les dioléfines, qui sont des composés précurseurs de gommes, et les composés styréniques (en particulier le styrène). Ces essences sont donc instables, ce qui nécessite la mise en oeuvre d'un procédé d'hydrogénation avant leur utilisation. De plus, selon le procédé de conversion, les essences peuvent contenir des quantités non négligeables de mercaptans, qu'il faut éliminer afin d'obtenir des essences « adoucies », négatives au « Doctor Test ».

Pour l'hydrogénation des dioléfines et des composés styréniques, deux grands types de catalyseurs sont généralement utilisés : les catalyseurs utilisant les métaux nobles du groupe VIII, tels que par exemple le palladium, et ceux utilisant les métaux non nobles du groupe VIII tels que par exemple le nickel. (Dans la présente description, la Classification Périodique des Eléments considérée est celle du Chemical Abstracts Service (CAS)). Cependant, ce second type de catalyseurs présente généralement une activité plus faible et des propriétés oligomérisantes, qui nécessitent leur régénération fréquente et l'utilisation d'une colonne de distillation après l'hydrogénation pour éliminer les composés lourds. Un exemple d'utilisation de ce type de catalyseur est donné dans le brevet US-A-3 691 066. Les catalyseurs à base de métaux nobles sont généralement plus actifs que les catalyseurs à base de métaux non nobles.

En ce qui concerne l'élimination des mercaptans, les catalyseurs utilisant les métaux non nobles du groupe VIII, tels que par exemple le nickel, permettent la transformation des mercaptans sous forme de sulfures. Cependant, ce type de catalyseurs présente généralement des propriétés oligomérisantes, qui nécessitent leur régénération fréquente et l'utilisation d'une colonne de distillation après l'hydrogénation pour éliminer les composés lourds. D'autre part, ces catalyseurs ne peuvent traiter des charges à fortes teneurs en mercaptans telles qu'on peut en trouver parmi les essences de craquage catalytique.

Par ailleurs, si les catalyseurs à base de métaux nobles du groupe VIII sont généralement plus actifs que les catalyseurs à base de métaux non nobles dans l'hydrogénation des composés dioléfiniques et des composés styréniques, ils ne permettent pas toujours la transformation des mercaptans. Leur utilisation nécessite donc d'adoucir l'essence hydrogénée par exemple par un procédé tel que ceux décrits dans les demandes de brevets français 2 753 717 et 2 753 718, au nom du même déposant.

On peut également noter que l'utilisation de systèmes métal du groupe VIII - métal du groupe VIB a déjà été mentionnée dans la littérature, par exemple par M. Yamada J. Yasumaru, M. Houalla, D. Hercules in : « Distribution of Molybdenum Oxidation States in Reduced Mo/Al$_2$O$_3$ Catalysts. Correlation with Benzène Hydrogenation Activity. », J. Phys. Chem., 95, 7037-7042 (1991) ou par A. Jimenez-Gonzalez, D. Schmeisser in : « Electron Spectroscopic Studies of Mo and Pt Modified γ-Al$_2$O$_3$ Model Catalyst. », J. Catal., *130*, 332-346 (1991). Mais, dans ces documents, il s'agissait de réactions d'hydrogénation totale.

Un autre example est le brevet anglais GB 954 203 A qui décrit l'hydrogénation sélective d'hydrocarbures acétyléniques et diolétiniques dans des mélanges gazeux contenant des concentrations élevées en oléfines avec un catalyseur bimétallique comprenant du palladium et du chrome.

Un premier objet de l'invention est de fournir un procédé d'hydrogénation sélective des composés dioléfiniques et des composés styréniques dans des essences insaturées, présentant des performances améliorées.

En ce qui concerne les essences contenant, outre des dioléfines et des composés styréniques, également des mercaptans, on a maintenant découvert - et c'est un autre objet de la présente invention - qu'il était possible de réaliser en une seule étape l'hydrogénation des dioléfines et des composés styréniques et la transformation des mercaptans, en utilisant un catalyseur à base d'au moins un métal noble du groupe VIII et d'au moins un élément choisi parmi les éléments du groupe VIB, choisi plus particulièrement entre le molybdène et le tungstène.

Par l'emploi d'un tel catalyseur, le procédé de l'invention présente l'avantage de permettre d'atteindre des conversions des dioléfines et des composés styréniques supérieures à celles atteintes avec un catalyseur au palladium seul. Il permet aussi la conversion importante des mercaptans. Les performances catalytiques du catalyseur utilisé sont également plus stables au cours du temps que celles d'un système monométallique.

Le procédé de traitement des coupes d'essences selon l'invention peut être défini, d'une manière générale, par le fait qu'il comprend la mise en contact d'une coupe d'essence en présence d'hydrogène, dans des conditions appropriées, avec un catalyseur comprenant un support particulaire consistant en au moins un oxyde réfractaire, sur lequel sont déposés au moins un métal noble du groupe VIII, tel que par exemple le palladium, et au moins un métal du groupe VIB, tel que par exemple le molybdène ou le tungstène.

De façon préférée, le catalyseur utilisé dans le procédé selon l'invention comprend un support constitué de grains d'au moins un oxyde réfractaire sur lequel sont déposés du palladium réparti à la périphérie des grains dudit support et au moins un métal choisi parmi le molybdène et le tungstène, sous la forme d'au moins un oxyde. Plus particulièrement, le palladium est réparti à la périphérie des grains dudit support, par exemple billes ou extrudés cylindriques, avec une pénétration dans les grains comprise dans une couche périphérique ne dépassant pas par exemple 80 % du rayon des billes ou des cylindres.

Plus particulièrement, la teneur en métal du groupe VIII (par exemple le palladium) est comprise entre 0,2 et 5 % en masse et la teneur en élément du groupe VIB (par exemple le molybdène et/ou le tungstène) entre 0,5 et 5 % en masse.

Le support du catalyseur utilisé dans le procédé de l'invention est choisi par exemple parmi les alumines, les silices, les silices-alumines, la magnésie et leurs mélanges. Le support préféré est une alumine et plus particulièrement une alumine de surface spécifique comprise entre 5 et 200 $m^2/g$, de préférence de 10 à 110 $m^2/g$ et encore plus avantageusement de 20 à 80 $m^2/g$. Le volume poreux du support d'oxyde réfractaire peut être par exemple de 0,4 à 1 $cm^3/g$.

La coupe d'essence à traiter peut présenter des teneurs en dioléfines élevées, correspondant par exemple à une MAV (abréviation de l'anglais « Maleic Anhydride Value »), déterminée selon la méthode UOP 326-82, comprise entre 20 et 100, et des teneurs en styrène allant par exemple jusqu'à 5 % en masse, sans que ces valeurs soient limitatives. Après hydrogénation, la teneur en dioléfines conduit à une MAV généralement inférieure à 8, de préférence inférieure à 4 et, de manière encore plus préférée, inférieure à 2. La concentration en styrène après hydrogénation est généralement inférieure à 1 % en masse et de préférence à 0,5 % en masse.

L'essence, selon son origine, peut contenir par exemple de 1 à 600 ppm de soufre sous forme de mercaptans. Le procédé de l'invention permet de transformer au moins 50 % des mercaptans présents en sulfures. Cette réaction se déroule lors du traitement selon l'invention visant à hydrogéner les dioléfines et/ou les composés styréniques.

Le traitement des coupes d'essences selon l'invention est généralement effectué sous pression, en présence d'une quantité d'hydrogène en faible excès par rapport à la valeur stoechiométrique qui permet l'hydrogénation des dioléfines et des composés styréniques. L'hydrogène et la charge sont injectés en courant ascendant ou descendant dans un réacteur, par exemple à lit fixe, dont la température est comprise entre 10 °C et 200 °C. La pression est généralement suffisante pour maintenir plus de 80 % en masse et de préférence plus de 95 % en masse de l'essence à traiter liquide à l'entrée du réacteur. Elle est en général comprise entre 4 et 50 bar, plus avantageusement entre 10 et 50 bar. La vitesse spatiale horaire, ou VVH, (définie comme le rapport du débit volumique de charge au volume de catalyseur) établie dans ces conditions est généralement comprise entre 1 et 20 $h^{-1}$ et de préférence entre 2 et 10 $h^{-1}$, et, de manière encore plus préférée, entre 3 et 10 $h^{-1}$.

Le procédé de l'invention peut aussi être mis en oeuvre selon des technologies différentes. Ainsi, par exemple, la réaction d'hydrogénation peut être réalisée dans un réacteur implanté dans une colonne de distillation ou dans un réacteur associé de manière externe à une colonne de distillation, comme décrit par exemple par le même déposant dans la demande de brevet français FR-A-2 752 236.

La description complète de toutes demandes, tous brevets et publications, cités ci-dessus et ci-dessous, et des demandes françaises correspondantes 97/07 213 et 97/07 214, déposées le 9 juin 1997, est incluse par référence dans la présente description.

Les exemples qui suivent, non limitatifs, illustrent l'invention.

## Exemple 1 (comparatif).

Un catalyseur comparatif A est préparé par imprégnation d'un support avec une solution de nitrate de palladium. Ce support se présente sous forme de billes de 2 à 4 mm de diamètre. Sa surface spécifique est de 30 $m^2/g$ et son volume poreux de 0,8 ml/g. Après imprégnation, le catalyseur est séché à 120 °C et calciné à 450 °C. La teneur en palladium du catalyseur comparatif A est de 0,35 % en masse. Dans ce catalyseur, le palladium est réparti à la périphérie des billes.

## Exemple 2.

Un catalyseur B est préparé à partir d'un support de surface spécifique 30 $m^2/g$ et de volume poreux 0,8 ml/g. Le support est d'abord imprégné par une solution de métatungstate d'ammonium. Le support est ensuite séché à 120 °C et calciné à 450 °C. Puis une solution de nitrate de palladium est imprégnée sur ce support. Le catalyseur est enfin séché à 120 °C et calciné à 450 °C.

Le catalyseur B contient 0,35 % en masse de palladium et 1,5 % en masse de tungstène. Dans ce catalyseur, le palladium est réparti à la périphérie des billes.

## Exemple 3 (comparatif).

Un catalyseur comparatif C est préparé par imprégnation d'un support avec une solution de nitrate de palladium. Ce support se présente sous forme de bille de 2 à 4 mm de diamètre. Sa surface spécifique est de 65 $m^2/g$ et sont volume poreux de 0,6 ml/g. Après imprégnation, le catalyseur est séché à 120 °C et calciné à 450 °C.

La teneur en palladium du catalyseur comparatif C est de 0,3 % en masse. Dans ce catalyseur, le palladium est réparti à la périphérie des billes.

## Exemple 4.

Un catalyseur D est préparé à partir du même support que celui utilisé dans l'exemple 3. Le support est d'abord imprégné par une solution d'heptamolybdate d'ammonium. Le support est ensuite séché à 120 °C et calciné à 450 °C. Puis une solution de nitrate de palladium est imprégnée sur ce support. Le catalyseur est enfin séché à 120 °C et calciné à 450 °C.

Le catalyseur D contient 0,3 % en masse de palladium et 1,0 % en masse de molybdène. Dans ce catalyseur, le palladium est réparti à la périphérie des billes.

## Exemple 5.

Un catalyseur E est préparé à partir du même support que celui utilisé dans l'exemple 3. Le support est d'abord imprégné par une solution métatungstate d'ammonium. Le support est ensuite séché à 120 °C et calciné à 450 °C. Puis une solution de nitrate de palladium est imprégnée sur ce support. Le catalyseur est enfin séché à 120 °C et calciné à 450 °C.

Le catalyseur E contient 0,3 % en masse de palladium et 3,0 % en masse de tungstène. Dans ce catalyseur, le palladium est réparti à la périphérie des billes.

## Exemple 6.

Les propriétés hydrogénantes des catalyseurs A et B sont évaluées en test discontinu dans un réacteur parfaitement agité. Pour chaque essai, 2 g de catalyseur sont réduits 2 heures à 150 °C sous courant d'hydrogène, puis transférés sous inerte dans le réacteur d'hydrogénation. La charge à hydrogéner est un mélange contenant 12 g de dioléfine dilué dans 180 $cm^3$ de n-heptane. La température du test est maintenue à 20 °C et la pression à 10 bar. Les résultats sont rassemblés dans le tableau 1. L'activité hydrogénante est exprimée en $mol \cdot min^{-1} \cdot g_{cata}^{-1}$.

Tableau 1

| Catalyseur | A | B |
|---|---|---|
| Activité ($mol \cdot min^{-1} \cdot g_{cata}^{-1}$) | 1,64 E-02 | 1,85 E-02 |
| Sélectivité % en butène-1 à 80 % de conversion du butadiène | 57 | 57 |

On remarque que l'activité du catalyseur B selon l'invention est 1,13 fois plus importante que celle du catalyseur comparatif A, le catalyseur B conservant une sélectivité en butène-1 élevée.

## Exemple 7.

Les propriétés hydrogénantes des catalyseurs A et B sont évaluées en réacteur isotherme à lit traversé.

Dans chaque essai, 20 $cm^3$ de catalyseur sont placés dans le réacteur d'hydrogénation et réduits pendant 4 heures à 150 °C sous une pression de 5 bar et un débit de 30 l/h d'hydrogène. Après réduction du catalyseur, la pression est portée à 30 bar et la température à 70 °C. La charge à hydrogéner est une charge modèle composée de 10 % en masse de styrène, 10 % en masse d'isoprène dans le n-heptane et 300 ppm de soufre sous forme de pentanethiol. La charge est injectée à une VVH de 3 $h^{-1}$ en présence d'hydrogène (rapport $H_2$/oléfines de 15). La durée du test est de 6 heures.

Des échantillons liquides sont prélevés et analysés par chromatographie en phase gazeuse.

De ces analyses, on détermine la conversion en styrène et en isoprène. La conversion est exprimée par le rapport

$$[(\text{concentration}_{\text{entrée}} - \text{concentration}_{\text{sortie}})/(\text{concentration}_{\text{entrée}})].$$

Dans ces conditions, les résultats obtenus sont ceux présentés dans le tableau 2.

Tableau 2

| Catalyseur | Conversion du styrène (%) | Conversion de l'isoprène (%) |
|---|---|---|
| A | 54 | 83 |
| B | 83 | 90 |

**Exemple 8.**

Une seconde série de tests en réacteur isotherme à lit traversé a été réalisée avec les catalyseurs A et B sur une charge essence de vapocraquage dans les conditions suivantes :

Pour chaque essai, 12,5 cm$^3$ de catalyseur à base sont placés dans le réacteur d'hydrogénation et réduits pendant 2 heures à 150 °C sous une pression de 5 bar et un débit de 27 l/h d'hydrogène. Après réduction du catalyseur, la pression est portée à 30 bar et la température à 70 °C. La charge à hydrogéner est une coupe essence de vapocraquage (point final à 200 °C, teneur en soufre : 50 ppm ; MAV : 68 mg/g ; et teneur en styrène : 4 % en masse). La charge est injectée à une VVH de 8 h$^{-1}$ en présence d'hydrogène (débit d'hydrogène de 16,5 l/h). Les résultats présentés dans le tableau 3 donnent les constantes de vitesses relatives pour l'hydrogénation du styrène et des dioléfines ainsi que les valeurs des MAV après 200 heures de fonctionnement.

Les constantes de vitesse sont déterminées en assimilant les réactions d'hydrogénation à des réactions d'ordre 1. Elles sont donc proportionnelles au logarithme du rapport entre les concentrations du produit considéré à l'entrée et à la sortie du lit de catalyseur.

Tableau 3

| Catalyseur | Constante de vitesse relative d'hydrogénation du styrène (h$^{-1}$) | Constante de vitesse relative d'hydrogénation des dioléfines (h$^{-1}$) | MAV entrée mg/g | MAV sortie mg/g |
|---|---|---|---|---|
| A | 0,14 | 0,40 | 68 | 22,0 |
| B | 0,25 | 0,64 | 68 | 15,8 |

On remarque que le catalyseur B, qui contient 1,5 % en masse de tungstène, est 1,8 fois plus actif pour l'hydrogénation du styrène et 1,6 fois plus actif pour l'hydrogénation des dioléfines que le catalyseur comparatif A.

**Exemple 9.**

Les propriétés hydrogénantes et adoucissantes des catalyseurs C, D et E sont évaluées en réacteur isotherme à lit traversé.

Pour chaque essai, 20 g de catalyseur sont placés dans le réacteur d'hydrogénation et réduits pendant 2 heures à 150 °C sous une pression de 30 bar et un débit de 50 l/h d'hydrogène. Après réduction du catalyseur, la pression est portée à 35 bar et la température à 100 °C. La charge à hydrogéner est une charge modèle composée de 10,3 % en masse de styrène, 10,3 % en masse d'isoprène et 522 ppm de soufre sous forme d'éthanethiol dans le toluène. La charge est injectée à une VVH de 1,4 h$^{-1}$ en présence d'hydrogène (rapport H$_2$/oléfines de 3,4).

Des échantillons liquides sont prélevés et analysés par chromatographie en phase gazeuse. A partir des résultats des analyses effectuées, on détermine la conversion du styrène et de l'isoprène.

L'analyse de la teneur en soufre de l'effluent après hydrogénation et la teneur en mercaptan de la coupe de départ permet de déterminer la conversion des mercaptans.

Les conversions sont exprimées par le rapport :

$$[(\text{concentration}_{\text{entrée}} - \text{concentration}_{\text{sortie}})/(\text{concentration}_{\text{entrée}})].$$

Dans ces conditions, les résultats obtenus après stabilisation (200 heures de fonctionnement) sont ceux présentés dans le tableau 4.

Tableau 4

| Catalyseur | Conversion du styrène (%) | Conversion de l'isoprène (%) | Conversion des mercaptans (%) |
|:---:|:---:|:---:|:---:|
| C | 98,0 | 98,8 | 59 |
| D | 98,8 | 99,4 | 72 |
| E | 99,6 | 99,8 | 80 |

A forte conversion, les catalyseurs D et E présentent de meilleures performances que le catalyseur comparatif C, tant pour l'hydrogénation du styrène et de l'isoprène que pour la conversion des mercaptans.

**Exemple 10.**

Une seconde série de tests a été réalisée avec les catalyseurs C, D et E dans les conditions suivantes :
Pour chaque essai, 20 g de catalyseur sont placés dans le réacteur d'hydrogénation et réduits pendant 2 heures à 150 °C sous une pression de 30 bar et un débit de 50 l/h d'hydrogène. Après réduction du catalyseur, la pression est portée à 30 bar et la température à 90 °C. La charge à hydrogéner est une charge modèle composée de 10 % en masse de styrène, 10 % en masse d'isoprène et 250 ppm de soufre sous forme de pentanethiol dans le n-heptane. La charge est injectée à une VVH de 3 h$^{-1}$ en présence d'hydrogène (rapport $H_2$/oléfines de 3,4). Les résultats présentés dans le tableau 5 donnent les conversions de l'isoprène du styrène et des mercaptans après 200 heures de fonctionnement.

Tableau 5

| Catalyseur | Conversion du styrène (%) | Conversion de l'isoprène (%) | Conversion des mercaptans (%) |
|:---:|:---:|:---:|:---:|
| C | 47 | 58 | 56 |
| D | 70 | 82 | 78 |
| E | 83 | 90 | 90 |

A plus faible conversion, le gain apporté par l'ajout de molybdène ou de tungstène pour l'hydrogénation des composés insaturés (styrène et isoprène) et pour l'élimination des mercaptans est encore plus marqué que dans l'exemple 9 ci-dessus.
Les exemples qui précèdent peuvent être répétés avec des résultats analogues en substituant les réactifs et/ou les conditions générales ou particulières décrites dans l'invention à ceux mis en oeuvre dans ces exemples.

**Revendications**

1. Procédé de traitement d'une coupe d'essence de vapocraquage ou de craquage catalytique contenant des composés dioléfiniques et des composés styréniques, **caractérisé en ce que** l'on fait passer une charge constituée de ladite coupe d'essence en présence d'hydrogène dans un réacteur au contact d'un catalyseur comprenant un support particulaire choisi parmi les oxydes réfractaires sur lequel sont déposés au moins un métal noble du groupe VIII et au moins un métal du groupe VIB.

2. Procédé selon la revendication 1, **caractérisé en ce que**, dans ledit catalyseur, la teneur en métal du groupe VIII est comprise entre 0,2 et 5 % en masse et la teneur en élément du groupe VIB entre 0,5 et 5 % en masse.

3. Procédé selon l'une des revendications 1 et 2, **caractérisé en ce que**, dans ledit catalyseur, ledit métal noble du groupe VIII est le palladium et ledit métal du groupe VIB est le molybdène ou le tungstène.

4. Procédé selon la revendication 3, **caractérisé en ce que** le palladium est réparti à la périphérie des grains dudit support.

5. Procédé selon la revendication 4, **caractérisé en ce que** le catalyseur est sous forme de billes ou d'extrudés cylindriques et le palladium est déposé à la surface des billes ou des extrudés cylindriques avec une pénétration dans une couche périphérique ne dépassant pas 80 % du rayon desdites billes ou desdits cylindres.

6. Procédé selon l'une des revendications 1 à 5, **caractérisé en ce que**, dans ledit catalyseur, ledit support est choisi parmi les alumines, les silices, les silices-alumines, la magnésie et leurs mélanges.

7. Procédé selon la revendication 6, **caractérisé en ce que**, dans ledit catalyseur, ledit support est une alumine de surface spécifique comprise entre 5 et 200 $m^2$/g et de volume poreux de 0,4 à 1 $cm^3$/g.

8. Procédé selon la revendication 7, **caractérisé en ce que**, dans ledit catalyseur, ledit support est une alumine de surface spécifique de 10 à 110 $m^2$/g.

9. Procédé selon l'une des revendications 1 à 8, **caractérisé en ce qu'**il comprend la mise en contact de ladite coupe avec ledit catalyseur sous pression et à une température comprise entre 10 °C et 200 °C, en présence d'une quantité d'hydrogène en faible excès par rapport à la valeur stoechiométrique, l'hydrogénation des dioléfines et des composés styréniques avec une vitesse spatiale horaire, définie comme le rapport du débit volumique de charge au volume de catalyseur, entre 1 et 20 $h^{-1}$.

10. Procédé selon l'une des revendications 1 à 9, **caractérisé en ce que** l'hydrogène et ladite coupe d'essence sont injectés en courant ascendant ou descendant dans un réacteur à lit fixe sous une pression suffisante pour maintenir liquide à l'entrée du réacteur plus de 80 % en masse de ladite coupe d'essence à traiter.

11. Procédé selon l'une des revendications 1 à 10, **caractérisé en ce que** la pression est comprise entre 4 et 50 bar.

12. Procédé selon l'une des revendications 1 à 11, **caractérisé en ce que** la coupe essence à traiter présente une teneur en dioléfines correspondant à une MAV comprise entre 20 et 100 et une teneur en styrène comprise entre 0 et 5 % en masse.

13. Procédé selon l'une des revendications 1 à 12, **caractérisé en ce que** l'essence contient en outre des mercaptans.

14. Procédé selon l'une des revendications 1 à 13, **caractérisé en ce que** la réaction d'hydrogénation est réalisée dans un réacteur implanté dans une colonne de distillation.

15. Procédé selon l'une des revendications 1 à 13, **caractérisé en ce que** la réaction d'hydrogénation est réalisée dans un réacteur associé de manière externe à une colonne de distillation.

**Patentansprüche**

1. Verfahren zur Behandlung einer Dampfcrackbenzinfraktion oder einer Benzinfraktion aus katalytischem Cracken, welche Fraktion diolefinische und styrenische Verbindungen enthält, **dadurch gekennzeichnet, dass** man eine aus der Benzinfraktion bestehende Charge in Gegenwart von Wasserstoff in einem Reaktor in Kontakt mit einem Katalysator passieren lässt, welcher einen speziellen Träger umfasst, gewählt unter den feuerfesten Oxyden, auf dem wenigstens ein Edelmetall der Gruppe VIII und wenigstens ein Metall der Gruppe VI B abgeschieden sind.

2. Verfahren nach Anspruch 1, **dadurch gekennzeichnet, dass** in dem Katalysator der Gehalt an GruppeVIII-Metall zwischen 0,2 und 5 Masseprozent und der Gehalt an GruppeVIB-Element zwischen 0,5 und 5 Masseprozent liegt.

3. Verfahren nach einem der Ansprüche 1 und 2, **dadurch gekennzeichnet, dass** in dem Katalysator das Edelmetall der Gruppe VIII Palladium ist und das Metall der Gruppe VI B Molybdän oder Wolfram ist.

4. Verfahren nach Anspruch 3, **dadurch gekennzeichnet; dass** das Palladium an der Peripherie der Körner des Trägers verteilt ist.

5. Verfahren nach Anspruch 4, **dadurch gekennzeichnet, dass** der Katalysator in Form von Kugeln oder zylindrischen Extrudaten vorliegt und Palladium auf der Oberfläche der Kugeln oder zylindrischen Extrudate mit einer Eindringung in eine periphere Lage abgeschieden ist, welche 80% des Radius der Kugeln oder der Zylinder nicht überschreitet.

**6.** Verfahren nach einem der Ansprüche 1 bis 5, **dadurch gekennzeichnet, dass** in dem Katalysator der Träger gewählt ist unter den Aluminiumoxyden, den Siliziumoxyden, den Silizium-Aluminiumoxyden, Magnesiumoxyd und deren Gemischen.

**7.** Verfahren nach Anspruch 6, **dadurch gekennzeichnet, dass** in dem Katalysator der Träger ein Aluminiumoxyd mit einer spezifischen Oberfläche zwischen 5 und 200 $m^2$ pro Gramm und einem Porenvolumen von 0,4 bis 1 $cm^3$ pro Gramm ist.

**8.** Verfahren nach Anspruch 7, **dadurch gekennzeichnet, dass** in dem Katalysator der Träger ein Aluminiumoxyd mit einer spezifischen Oberfläche von 10 bis 110 $m^2/g$ ist.

**9.** Verfahren nach einem der Ansprüche 1 bis 8, **dadurch gekennzeichnet, dass** es das Kontaktieren der Fraktion mit dem Katalysator unter Druck und bei einer Temperatur zwischen 10°C und 200°C in Gegenwart einer Wasserstoffmenge in geringem Überschuss im Verhältnis zur Stoechiometrie, die Hydrierung der Olefine und der styrenischen Verbindungen mit einer stündlichen Raumgeschwindigkeit umfasst, die als das Verhältnis des Chargenvolumendurchsatzes zum Katalysatorvolumen zwischen 1 und 20 $h^{-1}$ definiert ist.

**10.** Verfahren nach einem der Ansprüche 1 bis 9, **dadurch gekennzeichnet, dass** der Wasserstoff und die Benzinfraktion bei aufsteigendem oder absteigendem Strom in einen Reaktor mit Festbett unter einem ausreichenden Druck eingespritzt werden, um am Eingang des Reaktors mehr als 80 Masseprozent der zu behandelnden Benzinfraktion flüssig zu halten.

**11.** Verfahren nach einem der Ansprüche 1 bis 10, **dadurch gekennzeichnet, dass** der Druck zwischen 4 und 50 bar liegt.

**12.** Verfahren nach einem der Ansprüche 1 bis 11, **dadurch gekennzeichnet, dass** die zu behandelnde Benzinfraktion einen Diolefingehalt aufweist, der einem MAV zwischen 20 und 100 entspricht und einen Styrengehalt, der zwischen 0 und 5 Masseprozent liegt.

**13.** Verfahren nach einem der Ansprüche 1 bis 12, **dadurch gekennzeichnet, dass** das Benzin im übrigen Mercaptane enthält.

**14.** Verfahren nach einem der Ansprüche 1 bis 13, **dadurch gekennzeichnet, dass** die Hydrierreaktion in einem Reaktor durchgeführt wird, der in eine Destillationskolonne eingebaut ist.

**15.** Verfahren nach einem der Ansprüche 1 bis 13, **dadurch gekennzeichnet, dass** die Hydrierreaktion in einem Reaktor durchgeführt wird, der in externer Weise mit einer Destillationskolonne verbunden ist.

**Claims**

**1.** A process for treating a gasoline cut from steam cracking or catalytic cracking, which contains diolefinic compounds and styrenic compounds, **characterized in that** a feed constituted by said gasoline cut is passed, in the presence of hydrogen, into a reactor and brought into contact with a catalyst comprising a particulate support selected from refractory oxides on which at least one noble group VIII metal and at least one group VIB metal are deposited.

**2.** A process according to claim 1, **characterized in that** in said catalyst, the group VIII metal content is in the range 0.2% to 5% by weight and the group VIB metal content is in the range 0.5% to 5% by weight.

**3.** A process according to claim 1 or claim 2, **characterized in that** in said catalyst, said noble group VIII metal is palladium and said group VIB metal is molybdenum or tungsten.

**4.** A process according to claim 3, **characterized in that** the palladium is distributed at the periphery of the grains of said support.

**5.** A process according to claim 4, **characterized in that** the catalyst is in the form of beads or cylindrical extrudates and the palladium is deposited on the surface of the beads or cylindrical extrudates with a penetration into a peripheral layer not exceeding 80% of the radius of said beads or said cylinders.

6.  A process according to any one of claims 1 to 5, **characterized in that** in said catalyst, said support is selected from alumina, silica, silica-aluminas, magnesia and mixtures thereof.

7.  A process according to claim 6, **characterized in that**, in said catalyst, said support is an alumina with a specific surface area in the range 5 to 200 m$^2$/g and a pore volume of 0.4 to 1 cm$^3$/g.

8.  A process according to claim 7, **characterized in that** in said catalyst, said support is an alumina with a specific surface area in the range 10 to 110 m$^2$/g.

9.  A process according to any one of claims 1 to 8, **characterized in that** it comprises bringing said cut into contact with said catalyst under pressure and at a temperature in the range 10°C to 200°C, in the presence of a quantity of hydrogen which is in slight excess with respect to the stoichiometric value, at an hourly space velocity, defined as the ratio of the volume flow rate of the feed to the volume of catalyst, in the range 1 to 20 h$^{-1}$, to hydrogenate the diolefins and styrenic compounds.

10. A process according to any one of claims 1 to 9, **characterized in that** the hydrogen and said gasoline cut are injected in an upflow or downflow into a fixed bed reactor at a pressure which is sufficient to maintain more than 80% by weight of said gasoline cut to be treated in the liquid state at the reactor inlet.

11. A process according to any one of claims 1 to 10, **characterized in that** the pressure is in the range 4 to 50 bar.

12. A process according to any one of claims 1 to 11, **characterized in that** the gasoline cut to be treated has a diolefin content corresponding to a MAV in the range 20 to 100 and a styrene content in the range 0 to 5% by weight.

13. A process according to any one of claims 1 to 12, **characterized in that** the gasoline further contains mercaptans.

14. A process according to any one of claims 1 to 13, **characterized in that** the hydrogenation reaction is carried out in a reactor located within in a distillation column.

15. A process according to any one of claims 1 to 13, **characterized in that** the hydrogenation reaction is carried out in a reactor associated with and external of a distillation column.